Europäisches Patentamt

(19) European Patent Office

Office européen des brevets

(11) Veröffentlichungsnummer: **0 100 429**
**B1**

# (12) EUROPÄISCHE PATENTSCHRIFT

(45) Veröffentlichungstag der Patentschrift:
23.06.89

(21) Anmeldenummer: 83106225.2

(22) Anmeldetag: 25.06.83

(51) Int. Cl.⁴: **G 01 B 7/16**

(54) **Messumformer.**

(30) Priorität: 02.07.82 DE 3224757

(43) Veröffentlichungstag der Anmeldung:
15.02.84 Patentblatt 84/7

(45) Bekanntmachung des Hinweises auf die Patenterteilung:
23.06.89 Patentblatt 89/34

(84) Benannte Vertragsstaaten:
AT BE CH DE FR GB IT LI NL

(56) Entgegenhaltungen:
DE-A-2 238 525
DE-A-2 435 068
DE-A-2 816 444

ELEKTRONIK, Band 32, Nr. 9, Mai 1983, Seiten 107-112; W. TEICHMANN et al.: "Hallgeneratoren und Feldplatten"
REVIEW OF SCIENTIFIC INSTRUMENTS, Band 52, Nr. 9, September 1981, Seiten 1417-1419; Y.V. RAMANA et al.: "Simple and sensitive strain gauge displacement transducer"
Siemens Bauteile Informationen, Heft 5, 10. Jahrgang, 1972, Seiten 129-132.
elektronik industrie, Heft 11, 1980, Seiten 13-15.
Siemens-Bauteile-Informationen 6 (1968), Heft 5, Seiten 172-177.
Rudolf Prinz und Rudolf Charvat: "Sensor mit magneto-resistivem System zur Messung extrem

(73) Patentinhaber: **Deutsche Forschungs- und Versuchsanstalt für Luft- und Raumfahrt e.V., Linder Höhe Postfach 90 60 58, D-5000 Köln 90 (DE)**

(72) Erfinder: **Prinz, Rudolf, Dr., Clematisweg 21, D-3300 Braunschweig (DE)**
Erfinder: **Charvat, Rudolf, Militschstrasse 40, D-3300 Braunschweig (DE)**

(74) Vertreter: **Gralfs, Harro, Dipl.- Ing., Am Bürgerpark 8, D-3300 Braunschweig (DE)**

(56) Entgegenhaltungen: (Fortsetzung)
kleiner Wegdifferenzen".Vortragsmanuskript zum SENSOR 88 - Kongress, 3. - 5. Mai 1988, Nürnberg.
VFI 1/88, Seiten 34, 36, 38
Rudolf Prinz, Rudolf Charvat, Hans-Otto Höffler: "Sensoren-Technologie und Anwendung".
Vorabdruck aus VDI-Bericht Nr. 677.

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Meßumformer der im Oberbegriff des Patentanspruches 1 genannten Art.

Bei einem bekannten Meßumformer der gattungsgemäßen Art, der für die Messung von Schubverformungen von Klebstoffschichten bestimmt ist (DE-OS-2 435 068), ist zwischen den relativ zueinander beweglichen Trägern für die Meßpunkte ein induktiver Wegaufnehmer angeordnet. Ein solcher induktiver Wegaufnehmer erfordert die Verwendung aufwendiger Verstärkereinrichtungen. Darüber hinaus hat ein solcher Meßumformer bedingt durch die Induktionsspule ein verhältnismäßig großes Einbauvolumen und das reproduzierbare Auflösungsvermögen ist stark begrenzt.

Bekannt ist weiter die Messung von Wegänderungen mit Feldplatten (Siemens-Bauteile-Information 6 (1968) Heft 5, Seiten 172 - 177; Siemens-Bauteile-Report 17 (1979) Heft 2). Die Feldplatte ist ein Halbleiterbauelement, dessen Widerstand magnetfeldabhängig ist. Zur Messung von kleinen Wegänderungen ist es hierbei bekannt, die Feldplatte mehr oder weniger zwischen die Pole eines homogenen oder inhomogenen Magnetfeldes einzutauchen bzw. die Feldplatte fest zwischen den Polen eines homogenen Magnetfeldes anzuordnen und das Magnetfeld durch einen beweglichen Weicheisenanker in Nebenschluß zu verändern und die Widerstandsänderung zu messen.

Für die Verwendung als Weggeber sind weiter Feldplatten-Differentialfühler vorgeschlagen worden, bei denen nebeneinander zwei Feldplatten über Weicheisenpolschuhen auf einer Polfläche eines Permanentmagneten angebracht sind und der magnetische Fluß im Luftspalt zwischen den beiden entgegengesetzt liegenden Polen des Permanentmagneten durch einen mit geringem Abstand über den Feldplatten quer zu den Feldplatten beweglichen Anker mit hoher Permeabilität beeinflußt wird, dessen Breite in Bewegungsrichtung größer ist als der über deren Mitte gemessene Abstand der Feldplatten. Widerstandsänderungen der Feldplatten werden hierbei auch durch Änderungen des äußeren Magnetfeldes durch sonstiges Material mit hoher Permeabilität und auch durch Fremdmagnetfelder bewirkt. Die Meßgenauigkeit ist abhängig von der Genauigkeit der Führung des Weicheisenankers relativ zu den Feldplatten. Die beiden Feldplatten sind mit einem Widerstandspaar zu einer Meßbrücke verschaltet, deren Anzeige aufgrund der unterschiedlichen Temperaturkonstanten der Feldplatten und der Widerstände temperaturabhängig ist (Siemens-Bauteile-Information 10 (1972) Heft 5, Seiten 129 - 132).

Zur Erzeugung von elektrischen Impulssignalen mittels paarweise angeordneter Feldplatten ist es ferner bekannt, auf den einander entgegengesetzt liegenden Polflächen eines Permanentmagneten jeweils Weicheisenpolschuhe und darauf im Abstand voneinander Feldplattenpaare anzuordnen und die vier Feldplatten zu einer Brücke zu verschalten. An den auf dem Permanentmagnet voneinander weg gerichtet angeordneten Feldplattenpaaren werden Weicheisenteile mit diskreten Vorsprüngen, insbesondere Zahnanordnungen, vorbeigeführt. Hierbei ist der Wirkungsgrad am größten, wenn der Abstand der Mitten der Feldplatten gleich der halben Zahnteilung der Zahnanordnung ist. Mit einer derartigen Anordnung werden Impulse erzeugt, für Wegmessungen ist sie nicht vorgesehen (DE-OS-2 238 525).

Aufgabe der Erfindung ist es, einen Meßumformer der gattungsgemäßen Art so auszugestalten, daß Wegänderungen temperaturunabhängig in einem Meßbereich kleiner ± 100 μm mit einer hohen Auflösung mit geringem gerätetechnischen Aufwand meßbar sind.

Diese Aufgabe wird gemäß der Erfindung gelöst durch die im kennzeichnenden Teil des Patentanspruches 1 herausgestellten Merkmale.

Zweckmäßige Ausgestaltungen sind Gegenstand der abhängigen Ansprüche.

Mit einem Meßumformer gemäß der Erfindung läßt sich eine reproduzierbare Meßwertauflösung in der Größenordnung von kleiner als 10 nm erreichen. Der Meßumformer läßt sich mit sehr geringem Bauvolumen und Gewicht herstellen und zeichnet sich durch einen sehr großen Störabstand (Nutz-/Rauschsignal) aus.

Die Erfindung ist in der Zeichnung beispielsweise veranschaulicht und im nachstehenden im einzelnen anhand der Zeichnung beschrieben.

Fig. 1 zeigt prinzipiell den Aufbau und die Wirkung eines Meßumformers gemäß der Erfindung in einer Ausführungsform mit Permanentmagneten.

Fig. 2 zeigt wiederum schematisch eine Ausführungsform mit einem Elektromagneten.

Fig. 3 zeigt eine Ausführungsform eines Meßumformers gemäß der Erfindung mit einer ersten Anordnung von Meßfühlern.

Fig. 4 zeigt einen Schnitt längs der Linie IV - IV in Fig. 3.

Fig. 5, 6 und 7 zeigen weitere Ausführungsformen von Meßfühlern und Meßfühlerträgern.

Fig. 8 zeigt eine weitere Ausführungsform des Meßumformers.

Fig. 9 zeigt einen Schnitt längs der Linie X - X durch eine weitere Ausführungsform.

Fig. 10 zeigt einen Schnitt längs der Linie X - X in Fig. 9.

Fig. 11 zeigt eine weitere Ausführungsform in Seitenansicht.

Fig. 12 zeigt einen Schnitt längs der Linie XII - XII in Fig. 11.

Fig. 13 zeigt einen Schnitt längs der Linie XIII - XIII in Fig. 11.

Fig. 14 zeigt eine Draufsicht auf eine Ausführungsform einer Blattfeder, wie sie bei der Ausführungsform nach Fig. 11 verwendbar ist.

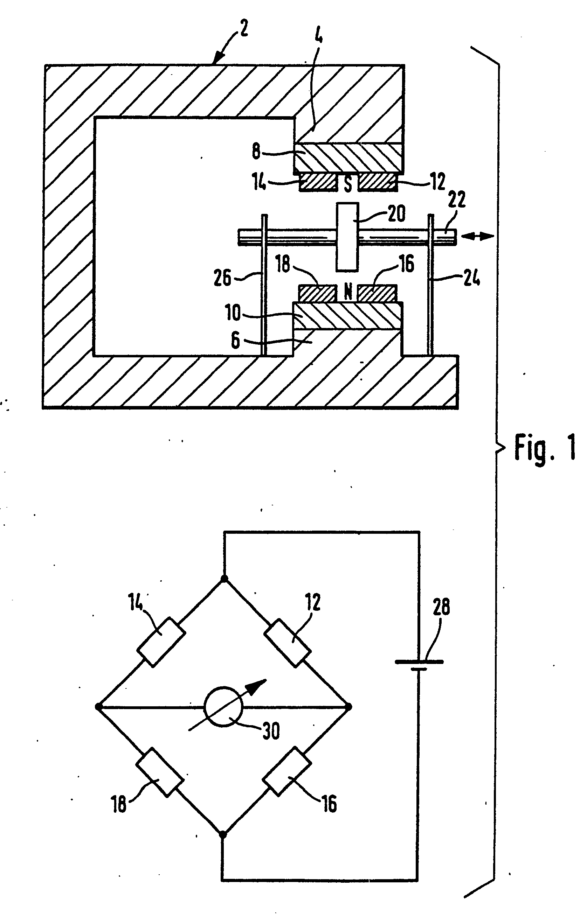

Der in Fig. 1 schematisch dargestellte Meßumformer weist einen hier C-förmig ausgebildete Rahmen 2 auf. Auf den einander zugewandten Seiten der Enden der Schenkel 4 und 6 sind Permanentmagnete 8, 10 befestigt, die parallel zueinander liegen, und zwar mit entgegengesetzter Polarität. Auf den freien Flächen der Permanentmagnete 8 und 10 sind jeweils nebeneinander zwei Feldplatten, und zwar die Feldplatten 12 und 14 auf dem Permanentmagneten 8 und die Feldplatten 16 und 18 auf dem Permanentmagneten 10 angebracht. Im freien Raum zwischen den beiden Feldplattenpaaren ist ein Anker 20 mit hoher Permeabilität angeordnet, und zwar auf einem beweglichen Träger 22, der über zwei im Abstand voneinander liegende Blattfedern 24 und 26 in Richtung des Doppelpfeils verschiebbar ist. Die Blattfedern sind im Rahmen eingespannt und mit dem Träger 22 fest verbunden. Die vier Feldplatten, die jeweils zwei in der Zeichnung nicht dargestellte elektrische Anschlüsse haben, sind, wie in Fig. 1 unten dargestellt, zu einer Brücke verschaltet und mit einer Spannungsquelle 28 zur Brückenspeisung versehen. Die Widerstandsänderung der Feldplatten kann mittels Instrument 30 angezeigt, mit Schreiber registriert oder nach AD-Wandlung abgespeichert und verarbeitet werden. Durch die Brückenschaltung wird gleichzeitig eine Temperaturkompensation der Feldplatten erzielt.

Die beiden Feldplattenpaare 12, 14 und 16, 18 können als handelsübliche Differentialfeldplattenfühler ausgebildet sein. Zur Erzielung eines größeren Meßbereiches kann es zweckmäßig sein, die Feldplattenfühler in einem größeren Abstand voneinander anzuordnen als dies bei handelsüblichen Differentialfeldplattenfühlern der Fall ist.

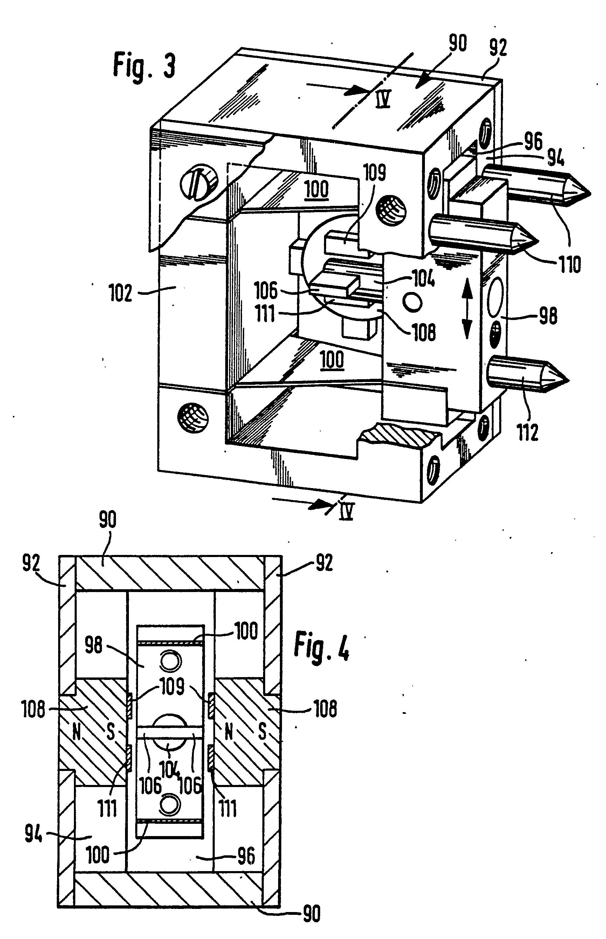

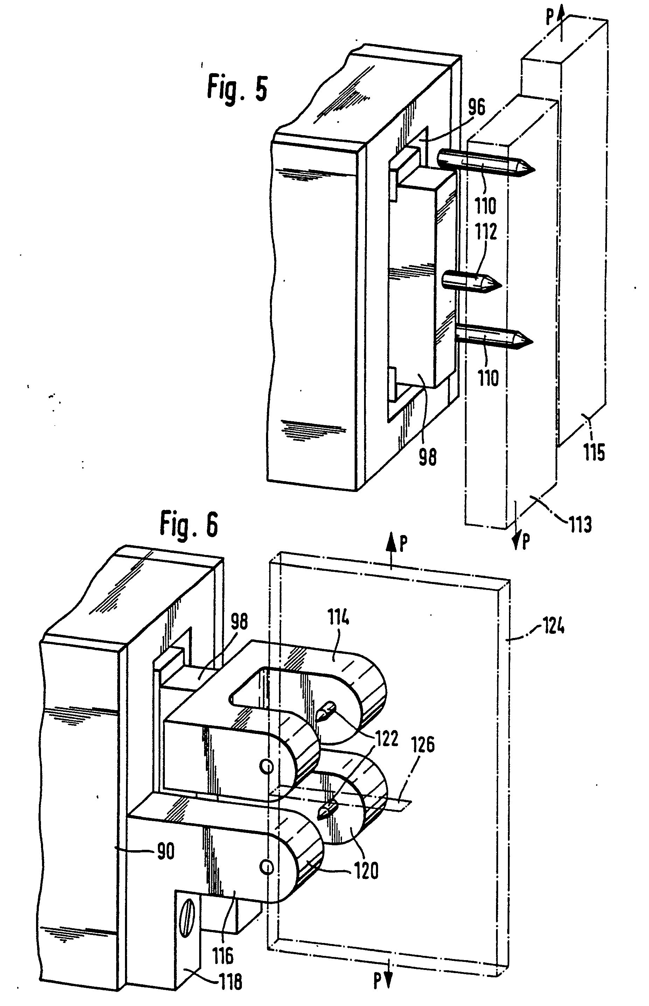

Durch den Anker 20 werden die magnetischen Feldlinien im Luftspalt zwischen den beiden einander gegenüberliegenden Magnetpolen konzentriert. Die Konzentration ist abhängig von der Dicke des Ankers. Bei Verschiebung des Ankers 20 ändert sich der Magnetfluß durch die Feldplatten der beiden Feldplattenpaare. Hierdurch wird die Brücke entsprechend verstimmt und im Anzeigegerät 30 eine entsprechende Anzeige hervorgerufen. In der Praxis hat sich herausgestellt, daß mit einer einfachen Brückenschaltung und einer zweckmäßig stabilisierten Speisespannung von 5 V DC bei einem Meßbereich des Meßumformers in der Größenordnung von 0,2 mm eine hohe Auflösung innerhalb des Meßbereiches erreicht wird. Bei einem Meßumformer der weiter unten beschriebenen Ausführungsform nach Fig. 4 und 5 wurden bei Verwendung von Feldplatten-Differentialfühlern FP 111 L 100 der Firma Siemens AG, München, folgende Werte erreicht:

Meßbereich ± 0,2 mm
Speisespannung für die Brücke 5 V DC stabilisiert
Innenwiderstand 225 Ω
Speisestrom 25 mA
Spannung in der Brückendiagonale für den Meßbereich ± 0,2 mm ± 300 mV.

Damit ist es möglich, den Meßwertgeber über einen einfachen Anpassungsvorverstärker direkt in ein Steuersystem einzubeziehen. Der Meßumformer hat ferner den Vorteil, daß er mit sehr geringen Abmessungen herstellbar ist. Hierauf wird weiter unten unter Bezug auf Fig. 3 und 4 noch näher eingegangen.

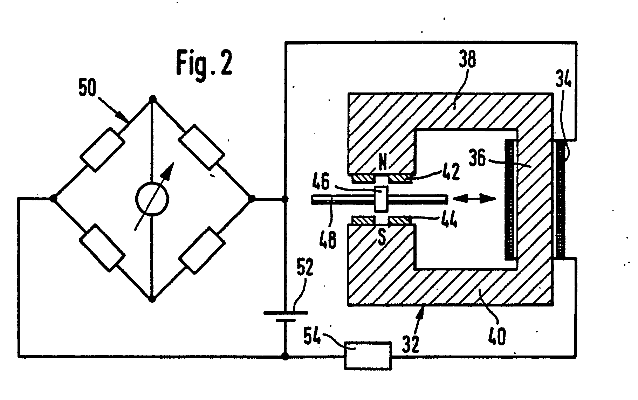

Bei der Ausführungsform nach Fig. 2 ist der hier wiederum C-förmig dargestellte Rahmen 32 als Kern eines Elektromagneten ausgebildet, dessen Wicklung 34 auf dem Steg 36 des Rahmens angeordnet ist. An den freien Enden der Schenkel 38, 40 sind auf den einander zugewandten parallelen Endflächen, die den Nordpol bzw. den Südpol bilden, in gleicher Weise wie bei der Ausführungsform nach Fig. 1 zwei Feldplattenpaare 42, 44 angeordnet. Im freien Raum zwischen den Feldplattenpaaren ist hier wiederum ein Anker 46 auf einem Träger 48 in Richtung des Doppelpfeils verschiebbar. Der Träger 48 kann in gleicher Weise wie bei der Ausführung nach Fig. 1 mit Hilfe von Blattfedern in Achsrichtung geführt sein. Die Feldplatten der beiden Feldplattenpaare 42 und 44 sind wiederum zu einer Brücke 50 verschaltet. Die Spannungsquelle 52 dient hier gleichzeitig als Spannungsquelle für den Elektromagneten 34. Durch die Brückenschaltung der Feldplattenpaare 42 und 44 wird wie bei dem Ausführungsbeispiel nach Fig. 1 eine Temperaturkompensation der Feldplatten erzielt. Zusätzlich kann eine Spulenstromsteuerung 54 für den Elektromagneten mit einem NTC- bzw. PTC-Widerstand vorgesehen werden, um temperaturabhängige Änderungen des Empfindlichkeitsunterschiedes der Feldplatten zu kompensieren.

Eine zweckmäßige Ausführungsform ist in Fig. 3 und 4 dargestellt. Der geschlossene viereckige Rahmen 90 ist seitlich durch Platten 92 abgedeckt, von denen in Fig. 3 lediglich die hintere Platte dargestellt, während die vordere Platte angedeutet ist. In dem Schenkel 94 des Rahmens 90 ist ein Fenster 96 ausgebildet, in dem ein Träger 98 beweglich angeordnet ist. Der Träger wird mittels zweier Blattfedern 100 geführt, die mit ihrem dem Träger 98 abgewandten Ende im hinteren Rahmenschenkel 102 durch Klemmung gehalten sind.

Mit dem Träger 98 fest verbunden ist ein Tragarm 104, der sich in das Innere des Rahmens 90 erstreckt und an dessen hinteren Ende ein sich quer zur Bewegungsrichtung des Trägers 98 - dargestellt durch den Doppelpfeil - erstreckender flacher Anker 106 aus einem Material hoher Permeabilität befestigt ist, dessen Flachseiten quer zur Bewegungsrichtung liegen.

Auf der Innenseite der Platten 92 ist jeweils ein Permanentmagnet 108 angeordnet, und zwar derart, daß die gegenüberliegenden Magnete auf ihren einander zugewandten Stirnseiten entgegengesetzte Polarität haben. Auf den Stirnseiten der Permanentmagnete 108 ist jeweils ein Paar im Abstand voneinander liegender Feldplatten 109 und 111 angeordnet, deren Längserstreckung in Richtung der Längsseiten des Ankers 106 und damit quer zur Bewegungsrichtung des Trägers 98 liegt. Zur Herabsetzung der Hysterese ist unter den Feldplatten eine dünne Schicht aus einem magnetisch weichen Material angeordnet. Für diese Schicht genügt eine Dicke, die bei etwa 0,2 bis 0,5 mm liegen kann.

Auf der Außenseite des Rahmenschenkels 94 und der Stirnseite des Trägers 98 sind Befestigungsanordnungen für Meßfühler oder Meßfühlerträger angeordnet. Vorzugsweise sind hierfür Gewindebohrungen vorgesehen, in die Meßspitzen 110, 112 eingeschraubt werden können bzw. über die Meßfühlerträger befestigbar sind. Bei der Ausführungsform nach Fig. 3 sind an der Stirnseite nebeneinander zwei Meßspitzen 110 im Schenkel 94 angeordnet, während im Abstand daneben an der Stirnseite des Trägers 98 eine Meßspitze 112 befestigt ist. Die Meßspitzen sind an ihrem in der Zeichnung nicht dargestellten hinteren Ende mit Gewinde versehen, mit denen sie in die Gewindebohrungen eingeschraubt sind.

Ein Meßumformer, wie er in Fig. 3 und 4 dargestellt ist, läßt sich mit sehr geringen Abmessungen herstellen, bei einer Rahmenbreite von 11 mm beispielsweise mit einer Rahmenhöhe von 20 mm und einer Rahmentiefe von 16 mm, also mit einem Gesamtvolumen von 3,5 cm$^3$ und einem Gewicht von ca. 20 g.

Bei einer Ausführungsform nach Fig. 5, in der für gleiche Teile gleiche Bezugszeichen eingetragen sind wie in Fig. 3 und 4, sind die feststehenden Meßspitzen 110 auf einer Seite des Fensters 96 am Rahmen angeordnet, während die Meßspitze 112 am Träger 98 in der Mitte angeordnet ist. Auf diese Weise wird eine relativ schmale Meßbasis erzielt, mit der beispielsweise Schubverformungen zwischen zwei beispielsweise miteinander verklebten Werkstücken 113 und 115 gemessen werden können. Die beiden Meßspitzen 110 greifen dabei an dem Teil 115 an, während die Meßspitze 112 an dem Teil 113 angreift.

Fig. 6 zeigt den Meßumformer mit Meßfühlerträgern für die Durchführung von Rißöffnungsmessungen. Mit dem Träger 98 ist hier eine U-förmige Klaue 114 verbunden, deren Spalt in Bewegungsrichtung des Trägers 98 liegt. Am Rahmen 90 sind winkelförmige Elemente 116 befestigt, und zwar mit einem Schenkel 118, der mit dem Rahmen verschraubbar ist. Der rechtwinklig davon abstehende Schenkel 120 fluchtet mit den Schenkeln der Klaue 114. In den Klauenschenkeln sind jeweils Schrauben 122 angeordnet, die auf ihrer Innenseite mit einer Spitze versehen sind. Mit diesen Befestigungsschrauben wird das Werkstück 124 beiderseits eines Risses 126 einmal mit der beweglichen Klaue 114 und zum anderen mit den feststehenden Klauenbacken 120 starr verbunden.

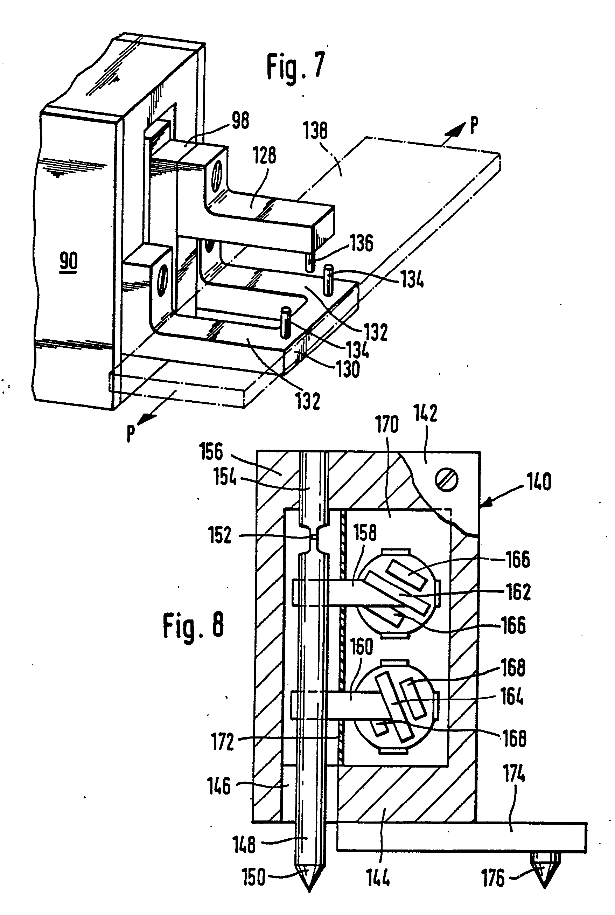

In Fig. 7 ist die Vorrichtung gemäß der Erfindung mit Meßfühlerträgern dargestellt, mit denen die Querdehnung eines Probestabes meßbar ist. Am Träger 98 ist hierbei ein winkelförmiger Adapter 128 fest verbunden, während mit dem Rahmen 90 ein U-förmiger Adapter 130 fest verschraubbar ist, der sich mit seinen Schenkeln 132 parallel zu dem Schenkel des Adapters 128 erstreckt. An den Enden der Meßadapter sind Anlagestifte 134 am Adapter 130 und Anlagestifte 136 am Adapter 128 angeordnet. Zur Durchführung einer Messung werden diese Stifte gegen die gegenüberliegenden Seiten eines Werkstückes 138 in Anlage gehalten, beispielsweise durch eine aufgesetzte Klammer oder dergleichen.

Mit dem in verschiedenen Ausführungsbeispielen beschriebenen Meßumformer sind Wegänderungen sehr genau und ohne wesentlichen Aufwand für Meßverstärker bei sehr geringer Masse des Meßumformers selbst meßbar. Durch die besondere Anordnung der Feldplatten wird auch bei nicht exakter Führung der beweglichen Teile das Meßergebnis nicht beeinflußt, und durch die Vollbrückenschaltung wird eine hohe Meßempfindlichkeit bei gleichzeitig sehr geringem Temperaturgang erzielt.

Bei der Ausführungsform nach Fig. 8 ist wiederum ein geschlossener Rahmen 140 vorgesehen, der seitlich durch Platten geschlossen ist, von denen in Fig. 8 die vordere Platte 142 angedeutet ist. Der in der Zeichnung unten liegende Rahmenschenkel 144 ist mit einer Öffnung 146 versehen, durch die der bewegliche Träger 148 durchgreift, der an seinem außen liegenden Ende mit einer Meßspitze 150 versehen ist.

Der Träger 148 ist mit seinem anderen Ende 154 im oberen Rahmenschenkel 156 fest eingespannt. Unterhalb der Einspannstelle ist ein Schwenkgelenk 152 vorgesehen, um das der Träger 148 schwenken kann. Am Träger 148 sind im Abstand übereinander zwei Träger 158, 160 angeordnet, an denen quer liegende flache Anker 162, 164 befestigt sind, die mit Differentialfeldplattenpaaren 166, 168 zusammenwirken, die in ähnlicher Weise wie die Feldplattenpaare 109, 111 der Ausführungsform nach Fig. 3 und 4 auf Permanentmagneten und damit auf den Platten 170, 172 befestigt sind. In der Zeichnung sind die Differentialfeldplatten 166, 168 dargestellt, die auf der hinten liegenden Platte 170 befestigt sind.

Da der Träger 148 eine Schwenkbewegung durchführt, ist es zweckmäßig, die Anker 162, 164 radial zum Schwenkgelenk 152 so anzuordnen und die Differentialfeldplatten 166, 168 entsprechend, so daß die Feldplatten parallel zu den Ankern liegen. Auf diese Weise wird die Nichtlinearität aufgrund der Bewegung der flachen Anker auf einem Kreisbogen weitgehend kompensiert. Diese Kompensation wird weiter dadurch erleichtert, daß Meßumformer der beschriebenen Art im allgemeinen für sehr kleine Meßbereiche im Bereich kleiner 1 μm ausgelegt sind.

Durch die Anordnung zweier Anker mit zugehörigen Feldplattenpaaren besteht die Möglichkeit, den Meßumformer für unterschiedliche Meßbereiche einzusetzen, und zwar unter Verwendung von Differentialfeldplatten mit gleichem Abstand. Selbstverständlich läßt sich die Ausführungsform nach Fig. 8 auch mit einem einzigen Anker ausbilden, der an beliebiger Stelle über die Länge des Trägers 148 angeordnet werden kann.

Bei der Ausführungsform nach Fig. 8 ist es in einfacher Weise möglich, die Feldplatten gegen Verschmutzung zu schützen. Zu diesem Zweck kann im Innenraum des Gestells 140 eine elastische Trennwand 172 vorgesehen sein, durch welche die Träger 158, 160 für die Anker 162, 164 durchgeführt sind.

Da sich Meßumformer nach Fig. 8 mit besonders kleinen Rahmenabmessungen bauen lassen, kann sich hier das Problem stellen, eine ausreichende Länge für die Meßbasis zur Verfügung zu haben. Zu diesem Zweck kann am unteren Rahmenschenkel, wie in der Zeichnung dargestellt, eine Platte 174 befestigt sein, die an ihrem Ende die gestellfesten Meßspitzen 176 trägt. Diese Platte 174 kann gleichzeitig so ausgebildet sein, daß mit ihr der Meßumformer auf dem zu messenden Objekt festgeklemmt werden kann. Selbstverständlich ist es grundsätzlich auch möglich, die gestellfeste Meßspitze 176 unmittelbar am Rahmen anzuordnen. Ebenso könnte der Rahmenschenkel 144 direkt über das Gestell 140 hinaus verlängert werden.

Eine weitere Verkleinerung der Abmessungen des Meßumformers läßt sich dadurch erreichen, daß auf dem Träger anstatt eines Ankers aus einem Material mit hoher Permeabilität ein Permanent magnet angeordnet wird, der das Magnetfeld liefert, das bei Verschiebung des Trägers den Widerstand der Feldplatten ändert. In diesem Fall bildet bei der Ausführungsform nach Fig. 1 der C-förmige Rahmen einen den magnetischen Rückschluß bildenden Körper. Es entfallen damit die bei der Ausführungsform nach Fig. 1 auf den Schenkeln des C-förmigen Gestells angeordneten Permanentmagnete 8 und 10. Der Permanentmagnet ist dabei zweckmäßig an seinen beiden Polen quer zur Bewegungsrichtung keilförmig ausgebildet. Auf diese Weise läßt sich die notwendige Magnetmasse mit der erforderlichen Konzentration der Feldlinien an den Polen erreichen.

Bei der Ausführungsform nach Fig. 3 und 4 würden bei einer solchen Ausführungsform die Magnete 108 entfallen. Die Feldplattenpaare 109, 111 können dann direkt auf den Platten 92 angebracht werden, wodurch sich die Breite des Rahmens 90 reduzieren läßt, wie sich aus einer Betrachtung der Fig. 4 ohne weiteres ergibt.

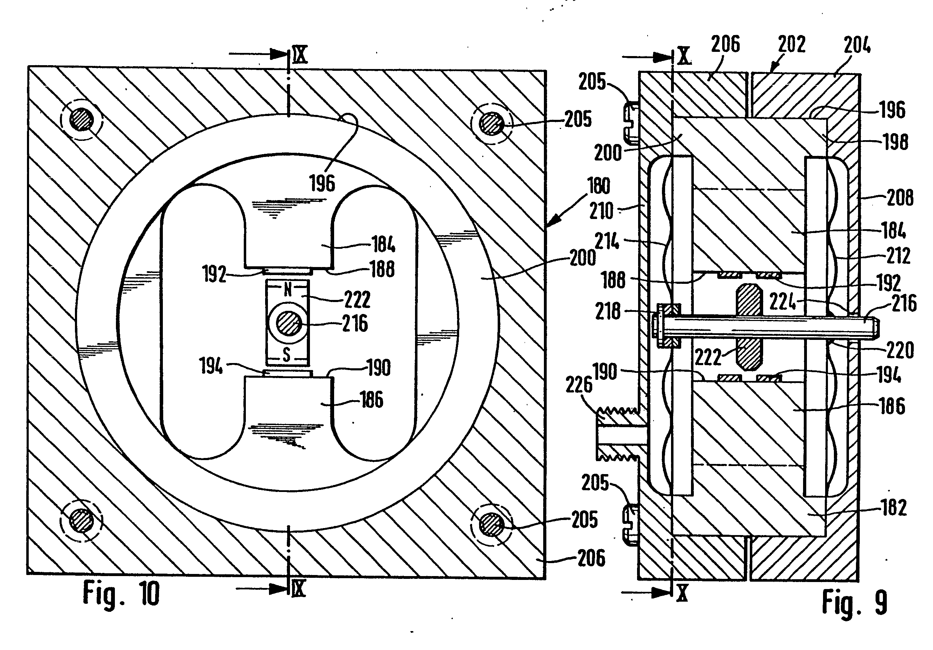

Eine weitere Ausführungsform eines Meßumformers unter Verwendung eines Permanentmagneten auf dem beweglichen Träger ist in den Fig. 9 und 10 dargestellt. Der Meßumformer 180 hat bei dieser Ausführungsform einen den magnetischen Rückschluß bildenden ringförmigen Körper 182 aus einem Material hoher Permeabilität, der innen mit zwei einander gegenüberliegenden Polen 184, 186 versehen ist, mit einander gegenüberliegenden parallelen ebenen Polflächen 188, 190, auf denen jeweils die Feldplattenpaare 192, 194 so angeordnet sind, daß deren Feldplatten in Achsrichtung des Körpers 182 in Abstand voneinander liegen. Der Rückschlußkörper 182 ist bei dieser Ausführungsform mit einer zylindrischen Umfangsfläche 196 versehen und im Bereich des Umfangs mit axial gerichteten ringförmigen Vorsprüngen 198, 200 ausgebildet. Der Rückschlußkörper 182 liegt in einem zweiteiligen Außengehäuse 202, das mit einer zylindrischen Ausnehmung entsprechend den Abmessungen des Rückschlußkörpers im Bereich seines Umfanges einschließlich der Vorsprünge 198, 200 versehen ist. Bei dem dargestellten Ausführungsbeispiel sind die beiden Gehäuseteile 204, 206 radial einwärts der Vorsprünge 198, 200 mit Wandungen 208, 210 versehen. Die Gehäuseteile sind mit Schrauben 205 miteinander verbindbar und gegen den Rückschlußkörper verspannbar.

Zwischen den Vorsprüngen 198, 200 und dem jeweiligen Gehäuseteil 204, 206 sind membranförmige Federn 212, 214 eingespannt. In diesen Membranfedern ist mittig ein stabförmiger Träger 216 gehalten, wobei links zwischen der Membran 214 und dem Träger 216 die Verbindung als Schraub- oder Klemmverbindung 218 und rechts die Verbindung zwischen der Membranfeder 212 und dem Träger als Löt- oder Schweißverbindung 220 angedeutet ist.

Auf dem Träger 216 ist der Permanentmagnet angeordnet, der mit seinem Nord- bzw. Südpol den Feldplattenpaaren 192 bzw. 194 zugewandt liegt. Im Bereich der Pole ist der Magnet 222 keilförmig ausgebildet, so daß eine relativ schmale Polfläche gebildet wird. Auf diese Weise wird eine Feldlinienkonzentration auf die jeweils gewünschte Feldbreite an den Polen des Magneten erzielt.

Der Träger 216 ist auf der rechten Seite durch eine Bohrung 224 in der Gehäusewand 208 nach außen geführt. In gleicher Weise kann auch die Gehäusewand 210 mit einer Bohrung versehen sein, durch die der Träger 214 nach außen vorsteht. Das Gehäuse 202 des Meßumformers 180 bildet die erste Meßreferenz, wobei gegebenenfalls an diesem Gehäuse Meßspitzen oder dergleichen angeordnet sein können. Die zweite Meßreferenz wirkt direkt oder indirekt auf den Träger 216. Gemessen wird auf diese Weise wie bei den übrigen Ausführungsformen die Querbewegung des Magneten und damit des Trägers quer zu den Feldplattenpaaren 192, 194.

In Fig. 9 ist links die Wand 210 des Gehäuseteils 206 mit einem Anschlußstutzen 226 für ein Fluid versehen, das durch diesen Stutzen in den abdichtend geschlossenen Raum zwischen der Wand 210 und der Membran 214 einführbar ist. Auf diese Weise lassen sich mit dem Meßumformer Druckmessungen durchführen, und zwar sowohl im Überdruck- als auch im Unterdruckbereich. Der Träger 216 braucht in diesem Falle nicht durch die Wand 208 hindurchgeführt zu werden. In dieser Wand wird jedoch zweckmäßig eine Öffnung für den Druckausgleich vorgesehen. Bei der Ausführung als Druckmesser kann der Träger 216 auch einseitig an der Membran 214 befestigt sein und die Membran 212 entfallen.

Bei einem Meßumformer mit einem ringförmigen Körper in der Ausführungsform nach Fig. 9 und 10 kann der Anker auch aus einem Material mit hoher Permeabilität bestehen, wobei dann auf den Polflächen Permanentmagnete vorgesehen werden, wie bei der Ausführungsform nach Fig. 1.

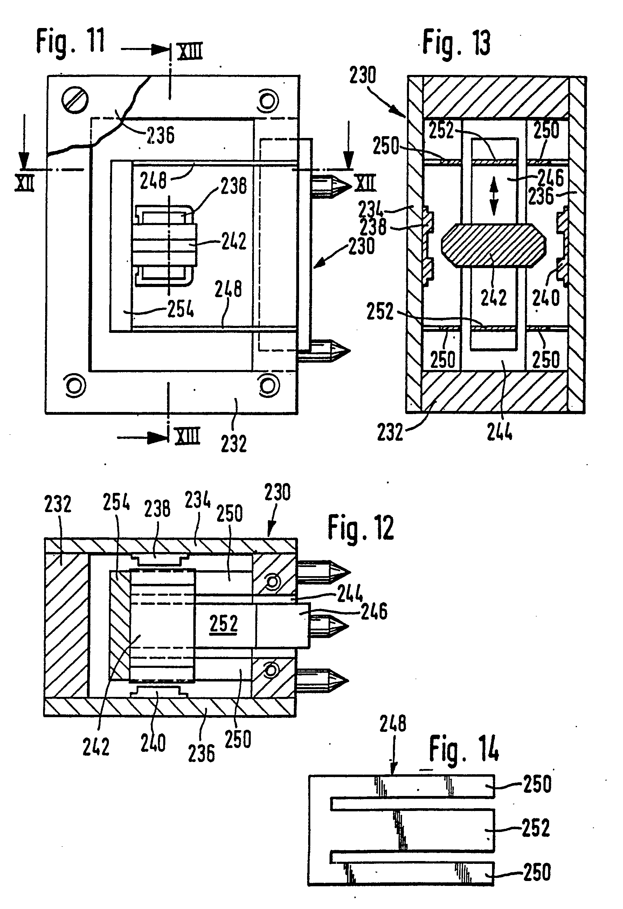

Die Ausführungsform nach Fig. 11 bis 14 entspricht in ihrem prinzipiellen Aufbau der Ausführungsform nach Fig. 3 und 4. Der Meßumformer 230 weist hier einen viereckigen Rahmen 232 auf, der beidseitig durch Platten 234, 236 abgedeckt ist. Auf diesen Platten sind die Feldplattenpaare 238, 240 angeordnet. Zwischen diesen Feldplattenpaaren liegt ein Permanentmagnet 242, der auch hier an seinen Polen keilförmig abgeschrägt dargestellt ist.

Der Rahmen ist in seinem einen Schenkel mit einem Fenster 244 versehen, in dem ein Träger 246 in Richtung des eingezeichneten Doppelpfeiles beweglich ist. Der Träger 246 kann wie bei der Ausführungsform nach Fig. 3 und 4 über zwei Blattfedern geführt sein, die in dem dem Fenster 244 gegenüberliegenden Schenkel des Rahmens festgelegt sind. Bei der Ausführungsform nach Fig. 11 bis 13 sind hiervon abweichend Blattfedern 248 vorgesehen, die, wie aus Fig. 14 ersichtlich, kammartig mit zwei äußeren Zungen 250 und einer mittleren Zunge 252 ausgebildet sind. Diese Federn sind jeweils mit den Enden ihrer äußeren Zungen 250 in dem Rahmenschenkel eingespannt, in dem das Fenster 244 ausgebildet ist. Der die drei Zungen verbindende Steg ist mit einem Tragelement 254 verbunden, das hier plattenförmig ausgebildet ist und in seiner Mitte den Magneten 242 trägt. Die mittlere Zunge 252 ist mit ihrem freien Ende mit dem Träger 246 verbunden. Durch eine derartige Ausbildung der Blattfeder wird die wirksame Federlänge verdoppelt. Dies führt zu einer Untersetzung des vom Magneten 242 zurückgelegten Weges im Verhältnis der wirksamen Längen der, Federzungen 250 bzw. 252, also beispielsweise eine Untersetzung im Verhältnis 1 : 2. Auf diese Weise wird der Meßbereich entsprechend vergrößert.

**Patentansprüche**

1. Meßumformer
mit einem Rahmen (90) mit einem ersten Meßpunkt (110), einem relativ zum Rahmen beweglich im/am Rahmen gelagerten Träger (98) für einen zweiten Meßpunkt (112), einem im/am Rahmen (90) angeordneten mechanisch/elektrischen Umformer, der mit einem Element (109, 111) mit dem Rahmen (90) und mit dem zweiten Element (106) mit dem beweglich gelagerten Träger (98) verbunden ist,
gekennzeichnet durch die Kombination folgender Merkmale:
a) zwei Feldplattenpaare (109, 111), die jeweils über eine Zwischenschicht aus einem magnetisch weichen Material mit ihren im Abstand voneinander liegender Feldplatten einander gegenüberliegend auf einander gegenüberliegenden, zueinander parallelen Magnetpolflächen in dem als magnetischen Rückschluß ausgebildeten Rahmen (90) angeordnet sind,
b) einen Anker (106) mit hoher Permeabilität, der mit dem Träger (98) für den zweiten Meßpunkt (112) verbunden und im Bereich zwischen den beiden Feldplatten (109, 111) der beiden Feldplattenpaare quer zum Symmetrielinie zwischen diesen Feldplatten beweglich ist,
c) die Feldplatten (109, 111) der beiden Feldplattenpaare mit einem Abgriff für das Meßsignal über einer der Brückendiagonalen liegen jeweils in einem der vier Zweige einer Brückenschaltung.

2. Meßumformer nach Anspruch 1, dadurch gekennzeichnet, daß die Feldplattenpaare auf den Magnetpolflächen von Permanentmagneten (108) angeordnet sind.

3. Meßumformer nach Anspruch 1, dadurch gekennzeichnet, daß der Träger (98) über zwei im Abstand voneinander angeordnete parallele Blattfedern (100) geführt ist.

4. Meßumformer nach Anspruch 1, dadurch gekennzeichnet, daß der Träger (216) mit wenigstens einer Membranfeder (212, 214) geführt ist.

5. Meßumformer nach Anspruch 4, dadurch gekennzeichnet, daß die Membranfeder (214) als bewegliche Wand einer mit einem Fluid beaufschlagten Kammer ausgebildet ist.

6. Meßumformer nach Anspruch 4, dadurch gekennzeichnet, daß der Träger (216) mit einem Ende mit einer Membranfeder (214) verbunden und von dieser getragen ist.

7. Meßumformer nach Anspruch 1, dadurch gekennzeichnet, daß der Träger (148) in dem Rahmen (140) einseitig schwenkbar aufgehängt ist und an seinem freien Ende den zweiten Meßpunkt (150) trägt.

8. Meßumformer nach Anspruch 7, dadurch gekennzeichnet, daß am Träger (148) in unterschiedlichen Abständen von dessen Schwenkgelenk (152) eine Mehrzahl von Ankern (162, 164) angeordnet ist, die jeweils mit gesonderten Feldplattenpaaren (164, 166) zusammenwirken.

9. Meßumformer nach Anspruch 1, dadurch gekennzeichnet, daß der Rahmen (182) ringförmig ausgebildet ist, wobei die Magnetpole (184, 186) vom inneren Umfang des Rahmens vorstehen und daß der Träger (216) in Achsrichtung des Rahmens verschiebbar gelagert ist.

10. Meßumformer nach Anspruch 1, dadurch gekennzeichnet, daß der Rahmen (90) viereckig ausgebildet ist, wobei die offenen Seiten des Rahmens durch Platten (92) abgedeckt sind, auf deren Innenseite jeweils Permanentmagnete mit auf deren aufeinander zu gerichteten Magnetpolflächen angeordneten Feldplattenpaaren (109, 111) angebracht sind, daß in einem Schenkel (94) des Rahmens (90) ein Fenster (96) ausgebildet ist, in dem der Träger (98) für den zweiten Meßpunkt über zwei parallelen Blattfedern (100) parallel zu diesem Rahmenschenkel geführt ist, und daß an der dem Inneren des Rahmens zugewandten Seite dieses Trägers der Anker (106) gehaltert ist.

11. Meßumformer nach Anspruch 10, dadurch gekennzeichnet, daß in der das Fenster (96) umgebenden Außenseite des Rahmens (90) und der Außenseite des Trägers (98) Gewindebohrungen zur lösbaren Befestigung von den Meßfühlern (110, 112) oder Meßfühlerträgern (110, 112; 114, 116; 128, 132) vorgesehen sind.

12. Meßumformer nach Anspruch 11, dadurch gekennzeichnet, daß als Meßfühler in die Gewindebohrungen einschraubbare Meßspitzen (110, 112) vorgesehen sind.

13. Meßumformer nach Anspruch 11, gekennzeichnet durch Meßfühlerträger, die Arme (128, 132) aufweisen, die sich quer zur Bewegungsrichtung des Trägers (98) von der Außenseite des Rahmens bzw. des Trägers weg erstrecken und an denen Meßspitzen (134, 136) angeordnet sind, die mit Abstand zueinander in Bewegungsrichtung des Trägers angeordnet sind.

14. Meßumformer nach Anspruch 11, dadurch gekennzeichnet, daß am Träger und am Rahmen gabelförmige Meßadapter (114, 116) mit sich in Bewegungsrichtung erstreckenden Aufnahmeschlitzen befestigt sind, und daß an deren Schenkeln (120) jeweils sich quer zur Bewegungsrichtung des Trägers (98) erstreckende Schrauben (122) zur Befestigung des Meßumformers an dem zu prüfenden Werkstück (124) vorgesehen sind.

## Claims

1. A transducer having a frame (90) with a first measurement point (110), a carrier (98) for a second measurement point (112), which is mounted in/on the frame so as to be movable relative to said frame, a mechanical/electrical converter arranged in/on the frame (90), which is connected with an element (109, 111) to the frame (90) and with the second element (106) to the movably mounted carrier (98), characterised by the combination of the following features:

a) two pairs of field plates (109, 111), arranged opposite one another and lying at a spacing from each other by means of an intermediate layer comprising a magnetically soft material and arranged on opposite but parallel magnet pole surface in the frame (90) which is formed as a magnetic return,

b) an armature (106) with a high permeability, which is connected to the carrier (98) for the second measurement point (112) and is movable in the region between the two field plates (109, 111) of the two field plate pairs transverse to the line of symmetry between these field plates,

c) the field plates (109, 111) of the two field plate pairs with a pick up for the measurement signal lie across one of the diagonals of the bridge each in one of the four branches of a bridge circuit.

2. A transducer according to claim 1, characterised in that the field plate pairs are arranged on the magnet pole surfaces of permanent magnets (108).

3. A transducer according to claim 1, characterised in that the carrier (98) is mounted by means of two parallel leaf springs (100) which are arranged at a spacing from each other.

4. A transducer according to claim 1, characterised in that the carrier (216) is mounted by at least one membrane spring (212, 214).

5. A transducer according to claim 4, characterised in that the membrane spring (214) is formed as a movable wall of a chamber acted upon by a fluid.

6. A transducer according to claim 4, characterised in that the carrier (216) is connected to a membrane spring (214) at one end and is supported thereby.

7. A transducer according to claim 1, characterised in that the carrier (148) is pivotally suspended at one end in the frame (140) and carries the second measurement point (150) at its free end.

8. A transducer according to claim 7, characterised in that a plurality of armatures (162, 164) is arranged on the support (148) at different spacings from its pivot (152), said armatures each cooperating with separate field plate pairs (164, 166).

9. A transducer according to claim 1, characterised in that the frame (182) is annular and the magnet poles (184, 186) project from the inner periphery of the frame and that the carrier (216) is mounted so as to be displacable axially of the frame.

10. A transducer according to claim 1, characterised in that the frame (90) is quadrilateral, and the open sides of the frame are covered by plates (92), on the inside of which are arranged permanent magnets in each case with field plate pairs (109, 111) arranged on their facing magnet pole surfaces, that in one limb (94) of the frame (90) a window (96) is formed, in which the carrier (98) for the second measurement point is mounted by means of two parallel leaf springs (100) parallel to this frame limb, and that on the side of this carrier facing the inside of the frame the armature (106) is mounted.

11. A transducer according to claim 10, characterised in that threaded bores for releasable fastening of the measurement sensors (110, 112) or measurement sensor carriers (110, 112; 114, 116; 128, 132) are provided in the outside of the frame (90) which surrounds the window (96) and in the outside of the carrier (98).

12. A transducer according to claim 11, characterised in that as measurement sensors there are provided measurement tips (110, 112) which screw into the threaded bores.

13. A transducer according to claim 11, characterised by measurement sensor carriers which have arms (128, 132) which extend transverse to the direction of movement of the carrier (98) away from the outside of the frame or the carrier and on which measurement tips (134, 136) are arranged which are spaced in the direction of movement of the carrier.

14. A transducer according to claim 11, characterised in that fork-like measurement adapters (114, 116) are fixed to the carrier and to the frame and have receiving slots extending in the direction of movement, and that screws (122) are provided on their limbs (120) which extend in each case transverse to the direction of movement of the carrier (98) for fixing the transducer to the workpiece (124) to be tested.

## Revendications

1. Transducteur de mesure
comportant un cadre (10) équipé d'un premier point de mesure (110), un support (98) monté dans/sur le cadre de manière à être mobile par rapport à ce dernier et prévu pour un second point de mesure (112), et
un transducteur mécanique/électrique, monté dans/sur le cadre (90) et relié par un élément (109, 110) au cadre (90) et, par le second élément (106), au support (98) monté de manière à être mobile,
caractérisé par la combinaison de caractéristiques suivantes:
a) deux couples de plaques de champ (109, 111), qui sont disposés dans le cadre (90) réalisé sous la forme d'un circuit de fermeture magnétique, moyennant respectivement l'interposition d'une couche intercalaire en un matériau magnétique doux, sur des surfaces, parallèles entre elles et se faisant face, de pôles magnétiques, de telle sorte que leurs plaques de champ distantes l'une de l'autre sont situées en vis-à-vis,
b) une armature (106), qui possède une perméabilité élevée, est reliée au support (98) prévu pour le second point de mesure (112) et est mobile dans la zone comprise entre les deux plaques de champ (109, 111) des deux couples de plaques de champ, transversalement par rapport à l'axe de symétrie, entre ces plaques de champ,
c) les plaques de champ (109, 111) des deux couples de plaques de champ sont situées respectivement dans l'une des quatre branches d'un circuit en pont, avec une prise pour le signal de mesure, par l'intermédiaire de l'une des diagonales du pont.
2. Transducteur de mesure selon la revendication 1, caractérisé en ce que les couples de plaques de champ sont disposées sur les surfaces des pôles magnétiques d'aimants permanents.
3. Transducteur de mesure selon la revendication 1, caractérisé en ce que le support (98) est guidé au moyen de deux ressorts en forme de lames (100), parallèles et distants l'un de l'autre.

4. Transducteur de mesure selon la revendication 1, caractérisé en ce que le support (216) est guidé à l'aide d'au moins un ressort à membrane (212, 214).
5. Transducteur de mesure selon la revendication 4, caractérisé en ce que le ressort à membrane (214) est réalisé sous la forme d'une paroi mobile d'une chambre chargée par un fluide.
6. Transducteur de mesure selon la revendication 4, caractérisé en ce que le support (216) est relié, par une extrémité, à un ressort à membrane (214) et est porté par cette dernière.
7. Transducteur de mesure selon la revendication 1, caractérisé en ce que le support (148) est accroché d'un côté, de manière à pouvoir pivoter, dans le cadre (140) et porte, au niveau de son extrémité libre, le second point de mesure (150).
8. Transducteur de mesure selon la revendication 7, caractérisé en ce que plusieurs armatures (162, 164), qui coopèrent respectivement avec des couples particuliers de plaques de champ (164, 166), sont disposées sur le support (148) à des distances différentes de l'articulation pivotante (152) du support.
9. Transducteur de mesure selon la revendication 1, caractérisé en ce que le cadre (182) est réalisé avec une forme annulaire, les pôles magnétiques (184,186) faisant saillie à partir du pourtour intérieur du cadre, et que le support (216) est monté de manière à être déplaçable dans la direction axiale du cadre.
10. Transducteur de mesure selon la revendication 1, caractérisé en ce que le cadre (90) est réalisé avec une forme quadrangulaire, les côtés ouverts du cadre étant couverts par des plaques (92), sur la face intérieure desquelles sont installés respectivement des aimants permanents comportant des couples (109, 111) de plaques de champ, disposés sur les surfaces polaires des aimants, qui se font face, que dans une branche (94) du cadre (90) se trouve ménagée une fenêtre (96), dans laquelle le support (98) prévu pour le second point de mesure est guidé par l'intermédiaire de deux ressorts parallèles en forme de lames (100), parallèlement à cette branche du cadre, et que l'armature (106) est maintenue sur le côté de ce support, tourné vers l'intérieur du cadre.
11. Transducteur de mesure selon la revendication 10, caractérisé en ce que des perçages taraudés permettant la fixation amovible des capteurs de mesure (110, 112) ou de supports (110, 112; 114, 116; 128, 132) de capteurs de mesure sont ménagés dans la face extérieure, qui entoure la fenêtre (96), du cadre (90) et dans la face extérieure du support (98).
12. Transducteur de mesure selon la revendication 11, caractérisé en ce que l'on prévoit, comme capteurs de mesure, des pointes de mesure (110, 112) pouvant être vissées dans les perçages taraudés.
13. Transducteur de mesure selon la revendication 11, caractérisé par des supports pour capteurs de mesure, qui comportent des bras (128, 132), qui s'étendent transversalement par rapport à la direction de déplacement du support (98) à partir de la face extérieure du cadre ou du support et sur lesquels des pointes de mesure (134, 136) sont disposées à une certaine distance les unes des autres dans la direction de déplacement du support.

14. Transducteur de mesure selon la revendication 11, caractérisé en ce que des adaptateurs de mesure en forme de fourches (114, 116) comportant des fentes réceptrices s'étendant dans la direction de déplacement sont fixés sur le support et sur le cadre, et que des vis (122), qui s'étendent respectivement transversalement par rapport à la direction de déplacement du support (98) sont prévues, sur les branches (120) des adaptateurs, pour la fixation du transducteur de mesure sur la pièce à traiter devant être contrôlée (124).

Fig. 1

# Fig. 2

Fig. 3

90 92

96 94

109

100

110

102

106
104
111
108

100

98

112

Fig. 4

90

92                    92

100

98

109

108                        108

N  S            N  S

104
106    106

111              111

94

100        96

90

Fig. 5

96

110

112

110

98

115

113

P

P

Fig. 6

98

114

124

122

126

120

90

116

118

P

P

Fig. 7

Fig. 8

Fig. 9

Fig. 10

Fig. 11

236

248  238

242

254  248

232

XII  XIII  XIII

Fig. 13

230

252  250

250

246

234  236

238

230

242  240

252

250  250

232  244

Fig. 12

232  254  238  234  250  230

244

246

252

242  240  236  250

Fig. 14

248

250

252

250